# EUROPÄISCHE PATENTSCHRIFT

(11) **EP 1 427 597 B1**
(45) Veröffentlichungstag und Bekanntmachung des Hinweises auf die Patenterteilung: **19.07.2006**
(21) Anmeldenummer: 02798703.1
(22) Anmeldetag: 31.08.2002
(51) Int. Cl.: B60J 7/05, B60J 7/02, B60J 7/043

(54) **ÖFFNUNGSFÄHIGES FAHRZEUGDACH**
OPENING VEHICLE ROOF
TOIT DE VEHICULE OUVRANT

(30) Priorität: 19.09.2001 DE 10146284
(43) Veröffentlichungstag der Anmeldung: 16.06.2004
(73) Patentinhaber: Webasto Vehicle Systems International GmbH, 82131 Stockdorf (DE)
(72) Erfinder: HANKE, Michael, 82049 Pullach (DE)
(74) Vertreter: Konnerth, Dieter Hans
(86) Internationale Anmeldenummer: PCT/EP2002/009756
(87) Internationale Veröffentlichungsnummer: WO 2003/024730

(56) Entgegenhaltungen:
- DE-C- 19 623 945
- US-A- 5 092 651
- US-A- 5 275 461
- US-A- 5 593 204

## Beschreibung

Die Erfindung betrifft ein öffnungsfähiges Fahrzeugdach gemäß dem Oberbegriff des Patentanspruches 1.

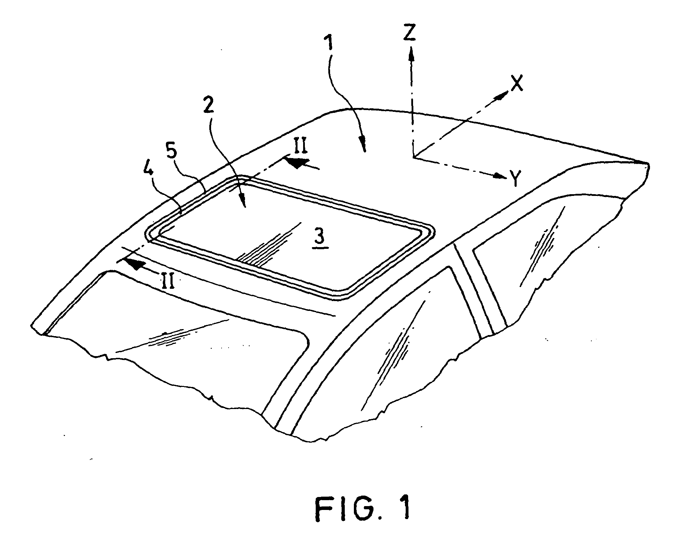

Die Ausstell- und Verschiebemechanik für den Deckel umfaßt im allgemeinen je einen in einer längs einer jeden Seitenkante der Dachöffnung angeordneten Führungsschiene verschiebbaren Antriebsschlitten, welcher über eine kulissenartige Anordnung mit einem fest im vorderen Bereich des Deckels angeordneten hebelartigen oder mit diesem integral ausgebildeten Deckelträger gekoppelt ist, der über an seinem vorderen Ende angeordnete Gleitschuhe in der Führungsschiene verschiebbar und verschwenkbar gelagert ist. Solange der Deckel nicht nach hinten in eine Öffnungsstellung verschoben ist, ist dieser über ein Riegelelement in X-Richtung (gemäß dem Koordinatensystem in Fig. 1) verriegelt. In diesem Zustand bewegt sich der Antriebsschlitten relativ zum Deckelträger und verstellt diesen (und damit den Deckel) zwischen der Lüftungsstellung über die Schließstellung bis in eine beispielsweise unter die Dachebene abgesenkte Absenkstellung als Vorstufe einer Verschiebestellung. In der letzten Phase dieser Bewegung des Antriebsschlittens wird das Riegelelement dann in eine Entriegelungsstellung bewegt und der Antriebsschlitten wird mit dem Deckelträger gekoppelt, so daß dieser und damit der Deckel bei einer weiteren Verschiebung des Antriebsschlittens nach hinten in eine Offnungsstellung mitgenommen wird.

Aus der DE 34 44 522 A1 ist ein Fahrzeugdach bekannt, bei welchem ein federnd in Eingriffsstellung mit der Führungsschiene vorbelasteter Rasthaken am vorderen Gleitschuh einer Schiebe-Hebedachmechanik vorgesehen ist, der beim Absenken des Deckels vor dem Verschieben unter das feste Fahrzeugdach vom Deckel oder einem mit diesem verbundenen Teil außer Eingriff gebracht wird. Bei einem derartigen Rasthaken ist eine aufwendige Justierung gegenüber dem Deckel oder dem mit diesem verbundenen Teil erforderlich, um eine einwandfreie Funktion zu gewährleisten.

Aus der US-A-5 092 651 ist ein gattungsgemäßes Fahrzeugdach bekannt geworden, das einen Deckel aufweist, der im Bereich seiner Vorderkante in einer Führungsbahn verschiebbar und schwenkbar geführt. Der Deckel ist mittels eines Ausstellhebels, der einerseits über Rollen an der Führungsbahn verschiebbar und verschwenkbar geführt ist und andererseits mittels eines Schwenklagers mit einem unterhalb des Deckels abstehenden Flansch verbunden ist, in seiner Schwerikstellung zwischen einer Öffnungsstellung, einer Schließstellung und einer Lüftungsstellung verstellbar. Wenn der Deckel in seiner Öffnungsstellung angeordnet ist und mittels des an der Führungsbahn verschiebbar gelagerten Schlittens und des vom Schlitten verschiebbaren Ausstellhebels in Richtung seiner Schließstellung bewegt wird, tritt ein Riegelstift, der an der Dachführung ortsfest angebracht ist, in eine Riegelkulisse ein, die an dem Ausstellhebel vorgesehen ist. Der Ausstellhebel behält hierbei seine Schwenkstellung bzw. untere Stellung unverändert bei. Der Ausstellhebel wird soweit entlang der Führungsbahn verschoben, bis der Riegelstift an das Ende eines Eintrittsabschnitts der Riegelkulisse gelangt und dort an einem gekrümmten Abschnitt der Riegelkulisse anliegt, so dass der feststehende Riegelstift ein weiteres Verschieben des Ausstellhebels verhindert. Damit wird die am Ausstellhebel angeordnete Riegelkulisse zum Ende einer Verschiebebewegung des Deckels aus einer Öffnungsstellung in Richtung seiner Schließstellung in Eingriff mit dem Riegelstift der Dachführung gebracht und somit gegenüber der Führungsbahn in Verschieberichtung blockiert gehalten.

Der Erfindung liegt die Aufgabe zugrunde, ein öffnungsfähiges Fahrzeugdach zu schaffen, bei dem eine einfache, zuverlässige und verschleißarme Ver- und Entriegelung der Ausstell- und Verschiebemechanik ermöglicht wird.

Diese Aufgabe wird durch ein Fahrzeugdach mit den Merkmalen des Patentanspruches 1 gelöst. Vorteilhafte Ausgestaltungen der Erfindung sind in den Unteransprüchen beschrieben.

Durch die Anordnung des Riegelelementes an einem Riegelhebel, der schwenkbar am Deckel oder an einem mit dem Deckel verbundenen Bauteil angeordnet ist, und durch die Möglichkeit einer Verrastung des Riegelelementes gegenüber der Führungsschiene, kann eine einfache, zuverlässige und zudem verschleißarme Ver- und Entriegelung der Ausstell- und Verschiebemechanik erreicht werden.

Gemäß der Erfindung ist vorgesehen, daß das Riegelelement mittels einer am Riegelhebel angeordneten Mitnehmereinrichtung (Kulissenstift, Kulissennut) zum Ende einer Verschiebebewegung des Deckels aus einer öffnungsstellung in Richtung seiner Schließstellung in Eingriff mit einer Restausnehmung der Führungsschiene gelenkt wird. Diese Konstruktion ist besonders einfach und zuverlässig.

Das Vorsehen eines Riegelhebels zur Halterung des Riegelelementes ermöglicht auch weitere vorteilhafte Ausgestaltungen und Funktionen des Fahrzeugdaches. Ein Problem, welches bei Fahrzeugdächern der gattungsgemäßen Art auftritt, liegt darin, daß beim Ausstellen des Deckels dessen Vorderkante eine Schwenkbewegung um den im allgemeinen hinter und unter dieser Vorderkante liegenden Schwenkpunkt des Deckelträgers ausführt, was zur Folge hat, daß sich die Vorderkante des Deckels nach unten und nach vorne bewegt. Dadurch wird die an der Vorderkante des Deckels befindliche Dichtung verhältnismäßig stark zusammengedrückt, so daß sie einen entsprechend großvolumigen, das Zusammendrücken erlaubenden Querschnitt haben muß, was zu einem entsprechend breiten Spalt zwischen der Vorderkante des Deckels und der Vorderkante der Dachöffnung führt. Da die Dichtung im allgemeinen eine über den gesamten Deckelumfang gleichbleibende Querschnittsform hat, werden auch die Spalte an den Seiten und an der Hinterkante des Deckels verhältnismäßig groß.

Zur Lösung dieses Problems ist gemäß einer weiteren Ausgestaltung der Erfindung vorgesehen, daß der Riegelhebel am Deckelträger an einem zu dem vorderen Lagerpunkt des Deckelträgers beabstandeten, beispielsweise nach hinten verlagerten Anlenkpunkt angeordnet ist. Dadurch wird beim Ausstellen des Deckels in seine Lüftungsstellung der Anlenkpunkt des Riegelhebels so bewegt, daß der vordere Lagerpunkt des Deckelträgers, der Anlenkpunkt des Riegelhebels und das in der Führungsschiene verrastete Riegelelement ein Dreieck bilden. Durch das Anheben des Anlenkpunktes beim Ausstellen des Deckels wird die durch den vorderen Lagerpunkt des Deckelträgers und das Riegelelement gebildete Grundseite verkürzt; da das Riegelelement festgelegt ist, zieht sich der vordere Lagerpunkt des Deckelträgers zurück und hebt so die Dichtung an der Vorderkante des Deckels von der Vorderkante der Dachöffnung ab. Diese Maßnahme ermöglicht es, eine im Querschnitt verhältnismäßig kleinvolumige Dichtung zu verwenden.

Der Riegelhebel ist in einer bevorzugten Ausgestaltung der Erfindung direkt an dem voranstehend beschriebenen, mit dem Deckel fest verbundenen hebelartigen Deckelträger angeordnet, so daß ein gesonderter Haltebock oder dergleichen für den Riegelhebel nicht erforderlich ist.

Für eine Verstellung des Riegelelementes zwischen seiner verrasteten und seiner nicht verrasteten Stellung ist beispielsweise jede Konstruktion geeignet, durch die der Riegelhebel zum Ende der Schwenkbewegung des Deckels aus dessen Lüftungsstellung in die Schließstellung bzw. in die Verschiebestellung derart verstellt wird, daß das Riegelelement aus der zugeordneten Rastaussparung herausgeführt und damit für eine Bewegung längs der Führungsschiene nach hinten freigegeben wird. Dabei ist es grundsätzlich denkbar, daß der die Schwenkbewegung des Deckels mitmachende Deckelträger oder der bei dieser Schwenkbewegung nach hinten bewegte Antriebsschlitten in die Mitnehmereinrichtung eingreift und den Riegelhebel verstellt.

Eine konstruktiv einfache und zuverlässige Ausgestaltung sieht vor, daß die Mitnehmereinrichtung ein am freien Ende des Riegelhebels angeordnetes erstes Kulissenelement umfaßt, welches mit einem am Antriebsschlitten angeordneten zweiten Kulissenelement zusammenwirkt. Das erste Kulissenelement kann beispielsweise ein zur Schwenkachse des Riegelhebels im wesentlichen paralleler Kulissenstift sein, welcher mit einer am Antriebsschlitten ausgebildeten, das zweite Kulissenelement bildenden Kulissennut zusammenwirkt. Die durch den Kulissenstift und die Kulissennut gebildete Anordnung ist so getroffen, daß das Riegelelement vor einer Verschiebebewegung des Deckels in eine Offnungsstellung aus der Rastausnehmung herausgeführt wird, zum Ende der Verschiebebewegung in die Schließstellung jedoch wieder in die Rastausnehmung eingeführt wird, wie anhand eines Ausführungsbeispiels genauer dargelegt wird.

Das Riegelelement ist gemäß einer Ausgestaltung der Erfindung eine seitlich vom Riegelhebel abstehende Nase, die während der Verschiebebewegung des Dekkels in eine Führungsnut der Führungsschiene eingreift, wobei die Rastausnehmung durch eine in einer Führungskante der Führungsnut ausgebildete Erweiterung gebildet ist, in die die Nase eingreifen kann, wenn der Deckel zwischen der Schließstellung und der Lüftungsstellung bewegt wird.

Die Rastausnehmung ist bei einer Ausgestaltung der Erfindung an der oberen Führungskante der Führungsnut ausgebildet, so daß der Riegelhebel zum Einführen des Riegelelementes in die Rastausnehmung nach oben und zum Ausführen nach unten verschwenkt werden muß; die das zweite Kulissenelement bildende Kulissennut ist dann durch eine zur Rückseite des Antriebsschlittens hin offene Nut mit einem ersten, im wesentlichen nach vorne sich erstreckenden Abschnitt und einem daran anschließenden zweiten, im wesentlichen nach vorne/unten sich erstreckenden Abschnitt ausgebildet.

Um das Einführen des Riegelelementes in die Rastausnehmung zu unterstützen, hat die Rastausnehmung an ihrer Vorderkante ein an die Bewegung des Riegelelementes beim Eintreten desselben in die Rastausnehmung angepaßtes Profil.

Um den Riegelhebel während der Verfahrbewegung des Antriebsschlittens aus der der Schließstellung des Deckels entsprechenden Position in die der Lüftungsstellung entsprechende Position in seiner Verriegelungsstellung zu halten, weist der Antriebsschlitten einen Stützbock auf, welcher den Riegelhebel von unten abstützt, wobei der Riegelhebel an seiner Unterkante so profiliert ist, daß während dieses gesamten Weges des Antriebsschlittens der Riegelhebel nach oben in seine Verriegelungsstellung gedrückt wird.

Die den Deckelträger mit dem Antriebsschlitten koppelnde Kulissenanordnung umfaßt in einer bevorzugten Ausgestaltung wenigstens einen an einer Seitenfläche des Deckelträgers abstehenden Kulissensteg und einen am Antriebsschlitten ausgebildeten, den Kulissensteg umgreifenden Greifabschnitt. Einen besonders stabilen und verkantungsfreien Eingriff dieser Kulissenanordnung erhält man dann, wenn der Deckelträger im wesentlichen ein Querschnittsprofil in Form eines auf dem Kopf stehenden T mit zwei mit der Unterkante des Deckelträgers bündigen seitlichen Kulissenstegen hat, wobei der Greifabschnitt des Antriebsschlittens im wesentlichen die Form einer zur Querschnittsform des Deckelträgers komplementären T-Nut hat. Diese Ausgestaltung ermöglicht eine besonders flachbauende Ausgestaltung des Deckelträgers, da die Unterkanten der die eigentliche Kulissenbahn bildenden Kulissenstege gleichzeitig die Unterkante des Deckelträgers bilden, was bei Kulissenschlitzen, die von Material in ausreichender Stärke umgeben sein müssen, nicht möglich ist.

Gemäß einer weiteren Ausgestaltung der Erfindung ist der Antriebsschlitten mit einem Antriebskabel koppelbar, wobei am antriebsschlittenseitigen Ende des Antriebskabels eine quer zur Kabellängsachse abstehende Nase angeordnet ist, die in eine an einer Seite des Antriebsschlittens ausgebildete Tasche einsteckbar ist. Auf diese Weise können sich das in einem eigenen Kanal der Führungsschiene laufende Antriebskabel und der Führungsschlitten seitlich gegeneinander bewegen, so daß ein Toleranzausgleich bei seitlichen Führungsungenauigkeiten des Antriebsschlittens möglich ist.

Mehrere Ausführungsbeispiele der Erfindung sind in der Zeichnung dargestellt und im folgenden näher beschrieben. Es zeigt:
- Fig. 1: eine schematische perspektivische Draufsicht auf ein Fahrzeugdach;
- Fig. 2: eine perspektivische Darstellung einer Ausstell- und Verschiebemechanik für einen Deckel in Richtung der Pfeile II-II der Fig. 1;
- Fig. 3: eine perspektivische Ansicht der Ausstell- und Verschiebemechanik der Fig. 2 in einer Ansicht etwa von der Gegenseite;
- Fig. 4: in einer perspektivischen Ansicht einen Antriebsschlitten für die Betätigung der Hebe- und Verschiebemechanik der Fig. 2 und 3;
- Fig. 5: in einer Seitenansicht eine Ausstell- und Verschiebemechanik gemäß den Fig. 2 bis 4 in verschiedenen Einstellungsphasen; und
- Fig. 6: in einer Seitenansicht eine andere Ausgestaltung einer Ausstell- und Verschiebemechanik.

Ein in Fig. 1 dargestelltes Fahrzeugdach 1 weist einen Deckel 2 auf, mittels dessen eine Dachöffnung 3 wahlweise verschlossen oder zumindest teilweise freigelegt werden kann. Der Deckel 2 ist bevorzugt als transparente Scheibe ausgebildet, die von einem Deckelrahmen 4, vorzugsweise aus Kunststoff, und einer am Deckelrahmen 4 befestigten umlaufenden Deckeldichtung 5 umgeben ist. Der Deckel 2 kann in an sich bekannter und deshalb nicht näher dargestellter Weise um eine im Bereich seiner Vorderkante liegende Ausstellachse nach oben ausgestellt werden (Lüftungsstellung) oder unter das Fahrzeugdach 1 abgesenkt (Verschiebestellung) und nach hinten verschoben werden (Öffnungsstellung).

Für die Durchführung der Ausstell- und Verschiebebewegung ist im allgemeinen zu beiden Seiten des Deckels 2 je eine Ausstell- und Verschiebemechanik angeordnet, von denen nachfolgend beispielhaft die der rechten Seite des Deckels 2 zugeordnete Ausstell- und Verschiebemechanik beschrieben wird.

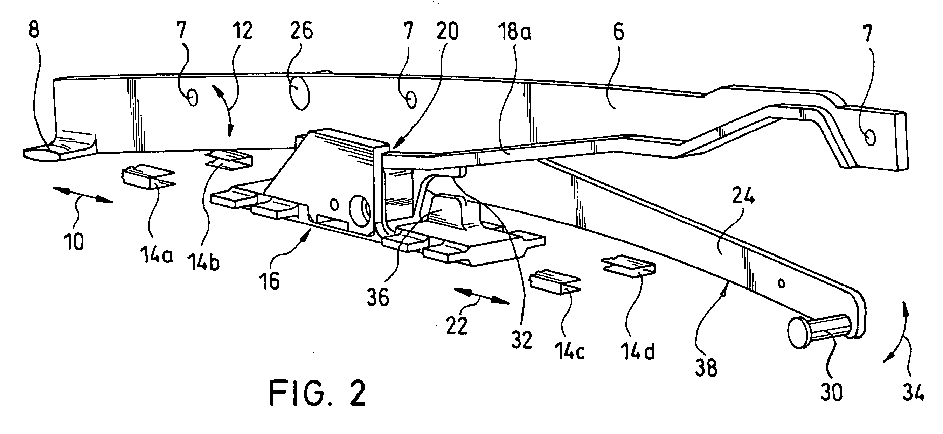

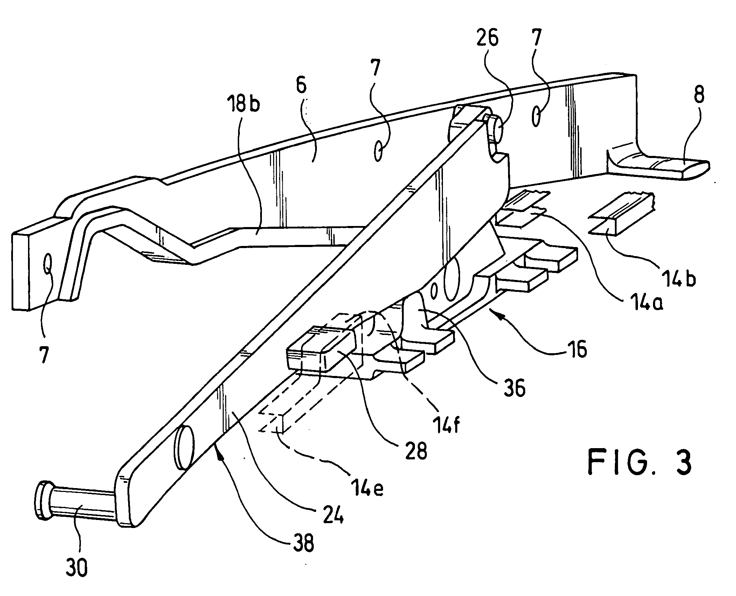

Wie insbesondere die Fig. 2 und 3 erkennen lassen, umfaßt die Ausstell- und Verschiebemechanik im wesentlichen einen an der Unterseite des in diesen Figuren nicht dargestellten Deckels über Bohrungen 7 und in diese eingreifende Befestigungsmittel befestigten, hebelartigen Deckelträger 6. Dieser ist über an dessen vorderem Ende angeordnete Gleitschuhe 8 in zugeordneten Führungsnuten 14a, 14b einer Führungsschiene 14 in Richtung des Doppelpfeiles 10 (in x-Richtung gemäß dem Koordinatensystem in Fig. 1) verschiebbar und in Richtung des Doppelpfeiles 12 verschwenkbar gelagert. Im Beispiel der Fig. 2 und 3 sind die Gleitschuhe 8 ballig ausgeführt, so daß sie bei bezüglich der z-Richtung (s. Koordinatensystem in Fig. 1) spielfreier Längsführung auch eine Schwenkbewegung entsprechend einem gewissen Schwenkwinkel zulassen.

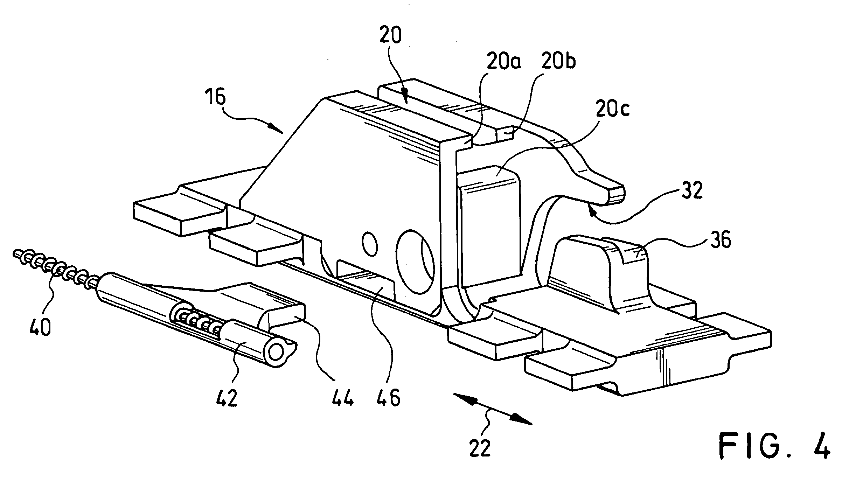

Der Deckelträger 6 ist über eine Kulissenanordnung mit einem längs den Führungsnuten 14c, 4d verschiebbaren Antriebsschlitten 16 gekoppelt. Zu diesem Zweck weist der Deckelträger 6 längs seiner Unterkante seitlich abstehende Kulissenstege 18a, 18b auf, die in einen im oberen Bereich des Antriebsschlittens 16 ausgebildeten Greifabschnitt 20 eingreifen. Der Greifabschnitt 20 hat einen zu dem Querschnitt des Deckelträgers 6 im Bereich der Kulissenstege im wesentlichen komplementäre Innenform, so daß der Deckelträger 6 vom Antriebsschlitten 16 spielfrei geführt wird. Dazu weist der Greifabschnitt 20 - wie im Detail in Fig. 4 gezeigt-zwei die jeweiligen Kulissenstege 18a, 18b übergreifende Führungsstege 20a, 20b sowie einen den Deckelträger 6 von unten abstützenden Stützbock 20c auf.

Die Kulissenstege 18a, 18b haben in an sich bekannter Weise einen derartigen Verlauf, daß bei einer Verschiebung des Antriebsschlittens 16 in Richtung des Doppelpfeiles 22 der Deckelträger 6 aus der in den Fig. 2 und 3 dargestellten, der Lüftungsstellung des Deckels entsprechenden Stellung über eine der Schließstellung entsprechende Stellung in eine der Verschiebestellung entsprechende abgesenkte Stellung bzw. zurück bewegt wird, wie nachfolgend noch genauer beschrieben wird.

Am Deckelträger 6 ist ein Riegelhebel 24 in einem hinter den Gleitschuhen 8 liegenden Anlenkpunkt 26 in einer Vertikalebene (x-z-Ebene) schwenkbar gelagert. Der Riegelhebel 24 trägt an seiner dem Deckelträger 6 abgewandten Seitenfläche ein Riegelelement 28. Das Riegelelement 28 ist durch eine seitlich vom Riegelhebel abstehende Nase gebildet, die in eine eigene Führungsnut 14e der Führungsschiene 14 eingreift und in dieser verschiebbar ist. Die Führungsnut 14e erweitert sich an ihrem vorderen Ende nach oben zu einer Rastausnehmung 14f, in die das Riegelelement 28 eintreten kann, wobei es den Riegelhebel 24 sowie den damit verbundenen Deckelträger 6 gegen eine Verschiebung längs der Führungsschiene 14 verriegelt.

Um den Riegelhebel 24 zu verschwenken und damit das Riegelelement 28 in die Rastausnehmung 14f einzuführen bzw. aus dieser herauszuführen, ist am Riegelhebel 24 eine Mitnehmereinrichtung angeordnet, die mit dem Antriebsschlitten 16 zusammenwirkt. Die Mitnehmereinrichtung umfaßt einen am freien Ende des Riegelhebels 24 angeordneten, im wesentlichen zur Schwenkachse des Riegelhebels 24 parallelen Kulissenstift 30, welcher mit einer an dem dem Kulissenstift 30 zugewandten Ende des Antriebsschlittens 16 ausgebildeten Kulissennut 32 zusammenwirkt, um den Riegelhebel 24 in Richtung des Doppelpfeiles 34 (Fig. 2) zu verschwenken, wie nachfolgend noch genauer beschrieben wird.

Wie aus den Fig. 2 und 3 weiter zu erkennen ist, wird der Riegelhebel 24 von unten durch einen am Antriebsschlitten 16 ausgebildeten Stützbock 36 abgestützt; die Kontur 38 an der Unterseite des Riegelhebels 24 ist so beschaffen, daß der Riegelhebel 24 während des gesamten Verfahrweges des Antriebsschlittens 16 gegenüber dem Riegelhebel 24 unter Berücksichtigung des sich vertikal bewegenden Anlenkpunktes 26 nach oben in eine Schwenkstellung gedrückt wird, bei der das Riegelelement 28 sich in der Rastausnehmung 14f befindet.

Der Antrieb des Antriebsschlittens 16 entlang der Führungsschiene 14 erfolgt in an sich bekannter Weise mittels eines Zug- und Druckkabels 40 (siehe Fig. 4), welches mit einem geeigneten Antrieb (nicht dargestellt), beispielsweise einem Elektromotor, verbunden ist. An dem dem Antriebsschlitten 16 zugeordneten Ende des Zug- und Druckkabels 40 ist ein Mitnehmerbeschlag 42 befestigt, welcher mit einer daran ausgebildeten, seitlich abstehenden Nase 44 in eine am Antriebsschlitten 16 ausgebildete Tasche 46 in y-Richtung einsteckbar ist. Diese Verbindung erlaubt eine Bewegung des Mitnehmerbeschlages 42 relativ zum Antriebsschlitten 16 in seitlicher Richtung (in y-Richtung gemäß Koordinatensystem in Fig. 1), so daß Toleranzungenauigkeiten bei der Seitenführung des Antriebsschlittens 16 ausgeglichen werden können.

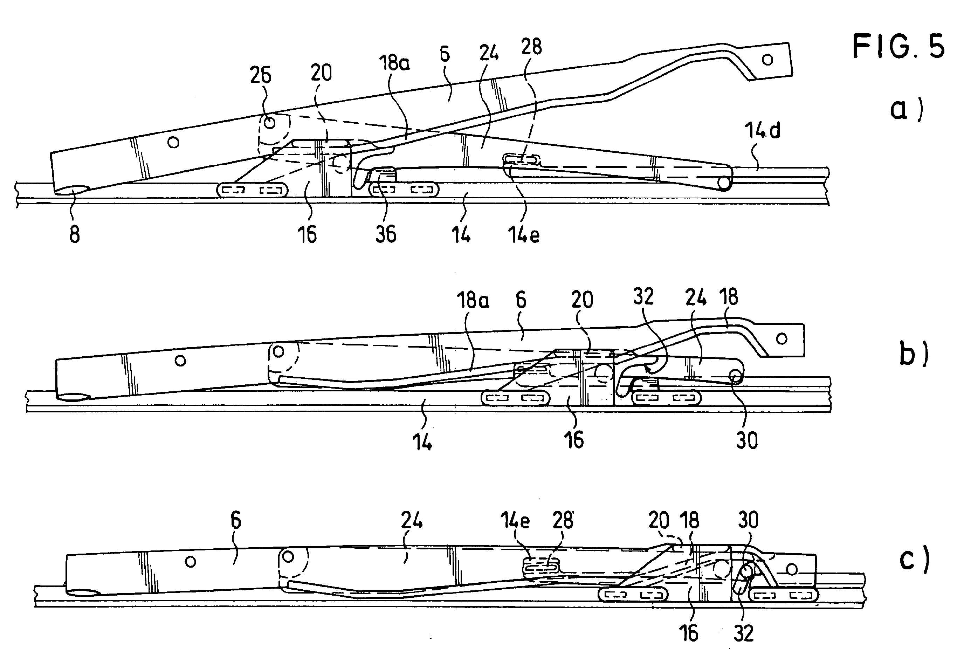

Fig. 5 zeigt die Ausstell- und Verschiebemechanik der Fig. 2 bis 4 in verschiedenen Bewegungsphasen.

Fig. 5a entspricht etwa der in den Fig. 2 und 3 gezeigten Stellung, die der Lüftungsstellung des Deckels 2 entspricht. Der Antriebsschlitten 16 ist ganz nach vorne verfahren und hat dabei den Deckelträger 6 mittels der durch den Greifabschnitt 20 und die Kulissenstege 18 gebildeten Kulissenanordnung nach oben ausgestellt, d.h. um den durch die Gleitschuhe 8 gebildeten Schwenkpunkt verschwenkt. Der Riegelhebel 24 wird dabei durch seine Kontur 38 im Zusammenwirken mit den am Antriebsschlitten 16 ausgebildeten Stützbock 36 nach oben gedrückt, so daß das Riegelelement 28 in die von der Führungsnut 14d nach oben abzweigende Rastausnehmung 14f gedrückt wird. Dadurch wird die aus Deckelträger 6 und Riegelhebel 24 bestehende Anordnung und damit der Deckel 2 in Längsrichtung (x-Richtung) arretiert.

In Fig. 5b ist der Antriebsschlitten 16 nach hinten verfahren, wobei durch Zusammenwirken des Greifabschnittes 20 des Antriebsschlittens 16 mit den Kulissenstegen 18 der Deckelträger 6 nach unten in eine die Dachöffnung 3 verschließende Stellung verschwenkt ist.

Bei einer weiteren Verschiebung des Antriebsschlittens 16 nach hinten wird durch Zusammenwirken des Greifabschnittes 20 mit den Kulissenstegen 18 der Dekkelträger 6 weiter nach unten verschwenkt derart, daß der mit dem Deckelträger 6 verbundene Deckel 2 in eine unter die Dachebene abgesenkte Stellung gelangt. Gleichzeitig tritt der am Ende des Riegelhebels 24 angeordnete Kulissenstift 30 in die am Antriebsschlitten 16 ausgebildete Kulissennut 32 ein, wie Fig. 5c zeigt. Bei einer weiteren Verschiebung des Antriebsschlittens 16 nach hinten (nicht dargestellt) wird der Kulissenstift 30 in der Kulissennut 32 weiter nach unten ausgelenkt, wodurch das Riegelelement 28 aus der Rastausnehmung 14f herausgeführt und in die zugeordnete Führungsnut 14d gelenkt wird. Bei einer weiteren Verschiebung des Antriebsschlittens 16 nach hinten kann deshalb die aus dem Deckelträger 6 und dem Riegelhebel 24 bestehende Anordnung vom Antriebsschlitten über den Kulissenstift 30 und die Kulissennut 32 nach hinten mitgenommen werden, so daß der Deckel 2 in eine Öffnungsstellung gelangt.

Wenn der Antriebsschlitten 16 wieder nach vorne bewegt wird, nimmt er zunächst über den Kulissenstift 30 und die Kulissennut 32 den Riegelhebel 24 und damit den Deckelträger 6 nach vorne mit, bis das Riegelelement 28 der Rastausnehmung 14f gegenüberliegt. Wegen des schrägen Verlaufes der Kulissennut 32 wird der Kulissenstift 30 beständig nach oben gedrückt, so daß das Riegelelement 28 dann in die Rastausnehmung 14f eintritt. Damit ist die aus dem Deckelträger 6 und dem Riegelelement 24 bestehende Anordnung in Längsrichtung gegenüber der Führungsschiene arretiert. Bei einer weiteren Verschiebung des Antriebsschlittens 16 nach vorne wird umgekehrt zu dem vorne beschriebenen Vorgang zunächst der Deckelträger 6 nach oben in die in Fig. 5b dargestellte Schließstellung und danach in die in der Fig. 5a gezeigte Lüftungsstellung bewegt. Bei dieser letzten Bewegungsphase wird gleichzeitig der vordere Gleitschuh 8 des Deckelträgers 6 um einen bestimmten geringen Betrag nach hinten verschoben (Deckelrückzug), so daß die an der Vorderkante des Deckels 2 angeordnete Dichtung von der Vorderkante der Dachöffnung 3 abgehoben wird, wie weiter vorne bereits dargelegt wurde.

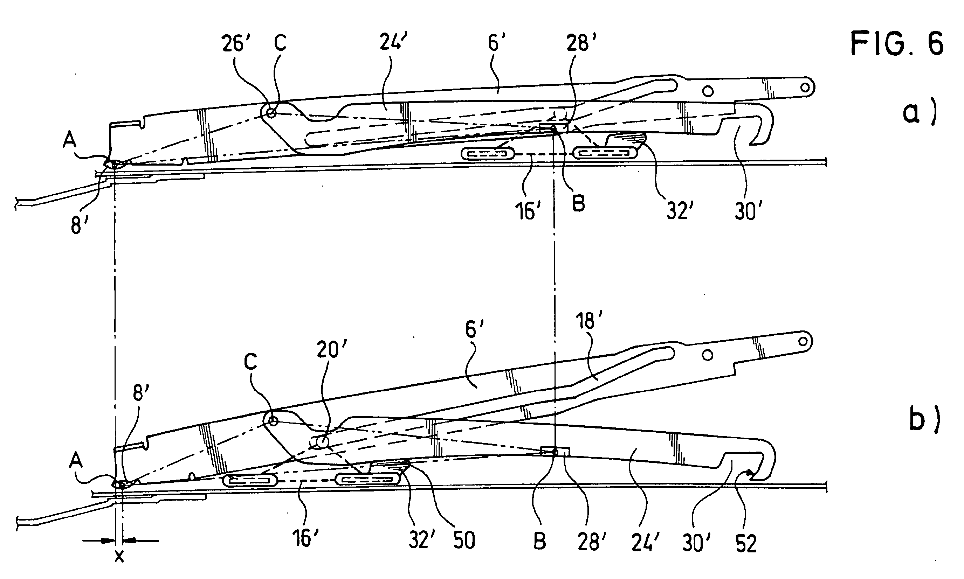

Dieser Effekt des Deckelrückzuges wird anhand der Fig. 6 erläutert. Die Fig. 6 zeigt eine ähnliche Anordnung wie die Fig. 5, mit einem Deckelträger 6', einem Riegelhebel 24' und einem schematisch dargestellten Antriebsschlitten 16'. Fig. 6a zeigt die Ausstell- und Verschiebemechanik in einer Stellung, die der Fig. 5b entspricht, d.h. der Deckelträger 6' befindet sich in einer Stellung, die der Schließstellung des Deckels 2 entspricht. Das Riegelelement 28' befindet sich in einer Verriegelungsstellung.

Der durch den vorderen Gleitschuh 8' des Deckelträgers 6' gebildete Punkt A, der durch das Riegelelement 28' gebildete Punkt B und der durch den Anlenkpunkt 26' gebildete Punkt C bilden ein flaches Dreieck, dessen Seiten AC und BC konstant sind, während die Seite AB variabel ist. Wenn der Antriebsschlitten 16' nach vorne verfahren wird, um den Deckel 2 auszustellen, wird der Punkt C angehoben, wobei sich die Seite AB verkürzen muß. Da der Punkt B gegenüber dem festen Fahrzeugdach 1 bzw. gegenüber der Führungsschiene 14 ein fester Punkt ist, verschiebt sich der Punkt A um den Betrag x nach hinten. Dies ist der Betrag des erwünschten Deckelrückzuges. Dieser Betrag x kann durch eine geeignete Wahl des Anlenkpunktes 26' am Deckelträger 6' variiert werden.

Fig. 6 zeigt außerdem eine gegenüber den Fig. 2 bis 5 abgewandelte Ausgestaltung der Ausstell- und Verschiebemechanik. Die den Deckelträger 6' mit dem Antriebsschlitten 16' koppelnde Kulissenanordnung ist in diesem Fall durch einen im Deckelträger 6' ausgebildeten Kulissenschlitz 18' gebildet, in den ein am Antriebsschlitten 16' angeordneter Kulissenstift 20' eingreift. Die Funktion dieser Kulissenanordnung entspricht im übrigen der anhand der Fig. 2 bis 5 beschriebenen Funktion des Kulissensteges 18 und des Greifabschnittes 20.

Die Mitnehmereinrichtung zum Verstellen des Riegelhebels 24' besteht im wesentlichen aus einem am Antriebsschlitten 16' ausgebildeten Nocken 32', welcher den Riegelhebel 24 von unten abstützt und in einer nach oben verschwenkten Stellung festhält, bei der das Riegelelement 28' in der zugeordneten Rastausnehmung liegt. Wenn der Antriebsschlitten 16' die Stellung erreicht, bei der das Riegelelement aus der Rastausnehmung herausgeführt werden soll, läuft der Nocken 32' mit einer an seiner Rückseite ausgebildeten Nockenfläche 50 gegen eine am hinteren Endes des Riegelhebels 24 ausgebildete Nockenfläche 52 und lenkt den Nocken 32' in eine Ausnehmung 30', wodurch der Riegelhebel 24 nach unten verschwenkt und das Riegelelement 28' aus der zugeordneten Rastausnehmung herausgeführt wird.

Um eine "Durchtauchbewegung" des Deckels beim Verstellen desselben aus der Lüftungsstellung in die Schließstellung zu erreichen, wobei die Hinterkante des Deckels zunächst unter die Dachebene abgesenkt und dann von unten in die Schließstellung eingefahren wird, kann der Kulissensteg einen entsprechenden, als Sattel bezeichneten Abschnitt aufweisen, wie nicht näher dargestellt wurde. Den gleichen Effekt kann man über die elektrische Ansteuerung erreichen, indem man den Deckel über die Schließstellung hinaus etwas in die abgesenkte Position vor der Verschiebestellung und wieder zurück bewegt. Damit wird erreicht, daß die Dichtung an der Hinterkante des Deckels in der Schließstellung nach unten ausgelenkt ist, was die Dichtwirkung verbessert.

### Bezugszeichenliste

- 1: Fahrzeugdach
- 2: Deckel
- 3: Dachöffnung
- 4: Deckelrahmen
- 5: Deckeldichtung
- 7: Bohrungen
- 6, 6': Deckelträger
- 8,: 8' Gleitschuhe
- 10: Doppelpfeil
- 12: Doppelpfeil
- 14: Führungsschiene
- 14a: Führungsnut
- 14b: Führungsnut
- 14c: Führungsnut
- 14d: Führungsnut
- 14e: Führungsnut
- 14f: Rastausnehmung
- 16,: 16' Antriebsschlitten
- 18: Kulissensteg
- 18a: Kulissensteg
- 18b: Kulissensteg
- 18': Kulissenschlitz
- 20: Greifabschnitt
- 20': Kulissenstift
- 20a: Führungssteg
- 20b: Führungssteg
- 20c: Stützbock
- 22: Doppelpfeil
- 24,: 24' Riegelhebel
- 26, 26': Anlenkpunkt
- 30: Kulissenstift
- 30': Ausnehmung
- 32: Kulissennut
- 32': Nocken
- 34: Doppelpfeil
- 36: Stützbock
- 38: Kontur
- 40: Zug- und Druckkabel
- 42: Mitnehmerbeschlag
- 44: Nase
- 46: Tasche
- 50: Nockenfläche
- 52: Nockenfläche

## Patentansprüche

1. Öffnungsfähiges Fahrzeugdach (1) mit wenigstens einem Deckel (2), welcher im Bereich seiner Vorderkante in einer Führungsschiene in x-Richtung verschiebbar und um eine in y-Richtung liegende Schwenkachse schwenkbar gelagert ist, und welcher mittels einer Ausstell- und Verschiebemechanik eine Dachöffnung (3) wahlweise verschließt (Schließstellung) oder durch Ausstellen seiner Hinterkante (Lüftungsstellung) oder durch eine Verschiebung längs der Führungsschiene (Öffnungsstellung) zumindest teilweise freigibt,
mit einem den Deckel (2) oder ein mit diesem verbundenes Bauteil in der Schließposition oder der Ausstellposition gegenüber der Führungsschiene (14) verriegelnden Riegelelement (28), das an einem Riegelhebel (24) angeordnet ist, der im wesentlichen in einer Vertikalebene (x-z-Ebene) schwenkbar am Deckel (2) oder an einem mit dem Deckel (2) verbundenen Bauteil angeordnet ist,
wobei das Riegelelement (28) durch die Ausstell- und Verschiebemechanik so steuerbar ist, daß es während der Verschiebebewegung des Deckels (2) längs der Führungsschiene (14) verschiebbar ist und während der Verschwenkbewegung des Deckels (2) gegenüber der Führungsschiene (14) verrastet ist,
**dadurch gekennzeichnet,**
**daß** das Riegelelement (28) mittels einer am Riegelhebel (24) angeordneten Mitnehmereinrichtung (30, 32) zum Ende einer Verschiebebewegung des Deckels (2) aus einer Öffnungsstellung in Richtung seiner Schließstellung in Eingriff mit einer Rastausnehmung (14f) der Führungsschiene (14) gebracht wird.

2. Fahrzeugdach nach Anspruch 1,
**dadurch gekennzeichnet, daß** der Riegelhebel (24) an einem zu dem vorderen Lagerpunkt (Gleitschuh 8) des Deckels (2) beabstandeten Anlenkpunkt (26) angeordnet ist derart, daß sich beim Verschwenken des Deckels (2) der Abstand zwischen dem vorderen Lagerpunkt des Deckels (2) und dem verrasteten Riegelelement (28) verkürzt.

3. Fahrzeugdach nach Anspruch 1 oder 2,
**dadurch gekennzeichnet, daß** der Riegelhebel (24) an einem mit dem Deckel (2) fest verbundenen Deckelträger (6) angeordnet ist, dessen vorderes Ende in der Führungsschiene (14) verschiebbar und verschwenkbar gelagert ist, und welcher über eine Kulissenanordnung (18, 20 bzw. 18'. 20') mit einem längs der Führungsschiene verschiebbaren Antriebsschlitten (16) gekoppelt ist.

4. Fahrzeugdach nach Anspruch 3,
**dadurch gekennzeichnet, daß** die Mitnehmereinrichtung ein am freien Ende des Riegelhebels (24) angeordnetes erstes Kulissenelement (30) umfaßt, welches mit einem am Antriebsschlitten (16) angeordneten zweiten Kulissenelement (32) zusammenwirkt.

5. Fahrzeugdach nach Anspruch 4,
**dadurch gekennzeichnet, daß** das erste Kulissenelement ein zur Schwenkachse des Riegelhebels (24) im wesentlichen paralleler Kulissenstift (30) ist, und daß das zweite Kulissenelement durch eine am Antriebsschlitten (16) ausgebildete Kulissennut (32) gebildet ist.

6. Fahrzeugdach nach einem der Ansprüche 1 bis 5,
**dadurch gekennzeichnet, daß** das Riegelelement (28) eine seitlich vom Riegelhebel (24) abstehende Nase ist, die in eine Führungsnut (14e) der Führungsschiene (14) eingreift, und daß die Rastausnehmung (14f) durch eine in einer Führungskante der Führungsnut (14e) ausgebildete Erweiterung gebildet ist.

7. Fahrzeugdach nach Anspruch 6,
**dadurch gekennzeichnet, daß** die Rastausnehmung (14f) an der oberen Führungskante der Führungsnut (14e) ausgebildet ist, und daß die das zweite Kulissenelement bildende Kulissennut (32) eine zur Rückseite des Antriebsschlittens (16) offene Nut mit einem ersten, im wesentlichen nach vorne sich erstreckenden Abschnitt und einem daran anschließenden zweiten, im wesentlichen nach vorne/unten sich erstreckenden Abschnitt ist.

8. Fahrzeugdach nach einem der Ansprüche 1 bis 7,
**dadurch gekennzeichnet, daß** die Rastausnehmung (14f) an ihrer Vorderkante ein an die Bewegung des Riegelelementes (28) beim Eintreten des Riegelelementes in die Rastausnehmung bzw. beim Austreten aus der Rastausnehmung (14f) angepaßtes Profil hat.

9. Fahrzeugdach nach einem der Ansprüche 1 bis 8,
**dadurch gekennzeichnet, daß** der Antriebsschlitten (16) einen Stützbock (36) aufweist, welcher den Riegelhebel (24) von unten abstützt, und daß der Riegelhebel (24) an seiner Unterkante mit einer Kontur (38) so profiliert ist, daß während des gesamten Weges des Antriebsschlittens (16) von seiner der Lüftungsstellung des Deckels (2) entsprechenden vorderen Position bis zu seiner dem Austritt des Rastelementes (28) aus der Rastausnehmung (14f) entsprechenden Position das Riegelelement (28) nach oben in seine Verriegelungsstellung gedrückt wird.

10. Fahrzeugdach nach einem der Ansprüche 3 bis 9,
**dadurch gekennzeichnet, daß** die den Deckelträger (6) mit dem Antriebsschlitten (16) koppelnde Kulissenanordnung wenigstens einen an einer Seitenfläche des Deckelträgers (6) abstehenden Kulissensteg (18, 18a, 18b) und einen am Antriebsschlitten (16) ausgebildeten, den Kulissensteg umgreifenden Greifabschnitt (20) umfaßt.

11. Fahrzeugdach nach Anspruch 10,
**dadurch gekennzeichnet, daß** der Deckelträger (6) im wesentlichen ein Querschnittsprofil in Form eines auf dem Kopf stehenden T mit zwei mit der Unterkante des Deckelträgers bündigen seitlichen Kulissenstegen (18a, 18b) hat, und daß der Greifabschnitt (20) des Antriebsschlittens (16) im wesentlichen die Form einer zur Querschnittsform des Deckelträgers (6) komplementären T-Nut hat.

12. Fahrzeugdach nach einem der Ansprüche 3 bis 11,
**dadurch gekennzeichnet, daß** der Antriebsschlitten (16) mit einem Zug- und Druckkabel (40) koppelbar ist, wobei am antriebsschlittenseitigen Ende des Zug- und Druckkabels (40) eine quer zur Kabellängsachse abstehende Nase (44) angeordnet ist, die in eine an einer Seite des Antriebsschlittens (16) ausgebildete Tasche (46) einsteckbar ist.

## Claims

1. Opening vehicle roof (1) having at least one panel (2) which, in the region of its front edge, is mounted such that it can be displaced in the x direction in a guide rail and pivoted about a pivot axis lying in the y direction, and which, by means of a raising and displacing mechanism, optionally closes (closed position) a roof opening (3) or, by raising its rear edge (ventilation position) or by means of a displacement along the guide rail (opening position), at least partly opens the said roof opening (3),
having a locking element (28) which, in the closed position or the raised position, locks the panel (2) or a component connected to the latter with respect to the guide rail (14), and which is arranged on a locking lever (24), which is arranged on the panel (2) or on a component connected to the panel (2) such that it can be pivoted substantially in a vertical plane (x-z plane),
it being possible for the locking element (28) to be controlled by the raising and displacing mechanism in such a way that it can be displaced along the guide rail (14) during the displacement movement of the panel (2) and is locked with respect to the guide rail (14) during the pivoting movement of the panel (2),
**characterized in that**
by means of a driver device (30, 32) arranged on the locking lever (24), at the end of a displacement movement of the panel (2), the locking element (28) is brought out of an opening position in the direction of its closed position in engagement with a locking recess (14f) in the guide rail (14).

2. Vehicle roof according to Claim 1, **characterized in that** the locking lever (24) is arranged at an attachment point (26) at a distance from the front mounting point (sliding shoe 8) of the panel (2) in such a way that, when the panel (2) is pivoted, the distance between the front mounting point of the panel (2) and the locked locking element (28) shortens.

3. Vehicle roof according to Claim 1 or 2, **characterized in that** the locking lever (24) is arranged on a panel support (6) which is firmly connected to the panel (2) and whose front end is mounted in the guide rail (14) such that it can be displaced and pivoted, and which is coupled via a slotted guide arrangement (18, 20 or 18', 20') to a drive carriage (16) that can be displaced along the guide rail.

4. Vehicle roof according to Claim 3, **characterized in that** the driver device comprises a first slotted guide element (30) arranged at the free end of the locking lever (24), which interacts with a second slotted guide element (32) arranged on the drive carriage (16).

5. Vehicle roof according to Claim 4, **characterized in that** the first slotted guide element is a slotted guide pin (30) substantially parallel to the pivot axis of the locking lever (24), and **in that** the second slotted guide element is formed by a slotted guide groove (32) formed on the drive carriage (16).

6. Vehicle roof according to one of Claims 1 to 5, **characterized in that** the locking element (28) is a lug projecting laterally from the locking lever (24), which engages in a guide groove (14e) in the guide rail (14), and **in that** the locking recess (14f) is formed by a widening formed in a guide edge of the guide groove (14e).

7. Vehicle roof according to Claim 6, **characterized in that** the locking recess (14f) is formed on the upper guide edge of the guide groove (14e), and **in that** the slotted guide groove (32) forming the second slotted guide element is a groove open towards the rear of the drive carriage (16) and having a first section extending substantially forwards and a second section adjacent thereto and extending substantially forwards/downwards.

8. Vehicle roof according to one of Claims 1 to 7, **characterized in that**, at its front edge, the locking recess (14f) has a profile matched to the movement of the locking element (28) as the locking element enters the locking recess or emerges from the locking recess (14f).

9. Vehicle roof according to one of Claims 1 to 8, **characterized in that** the drive carriage (16) has a supporting pad (36) which supports the locking lever (24) from below, and **in that**, on its lower edge, the locking lever (24) is profiled with a contour (38) such that, during the entire travel of the drive carriage (16) from its front position corresponding to the ventilation position of the panel (2) as far as its position corresponding to the emergence of the locking element (28) from the locking recess (14f), the locking element (28) is forced upwards into its locking position.

10. Vehicle roof according to one of Claims 3 to 9, **characterized in that** the slotted guide arrangement coupling the panel support (6) to the drive carriage (16) comprises at least one slotted guide web (18, 18a, 18b) protruding from a side surface of the panel support (6) and a gripping section (20) formed on the drive carriage (16) and engaging around the slotted guide web.

11. Vehicle roof according to Claim 10, **characterized in that** the panel support (6) has substantially a cross-sectional profile in the form of an inverted T with two lateral slotted guide webs (18a, 18b) flush with the lower edge of the panel support, and **in that** the gripping section (20) of the drive carriage (16) substantially has the shape of a T groove complementary to the cross-sectional shape of the panel support (6).

12. Vehicle roof according to one of Claims 3 to 11, **characterized in that** the drive carriage (16) can be coupled to a push/pull cable (40), a lug (44) which can be inserted into a pocket (46) formed on one side of the drive carriage (16) and projects transversely with respect to the cable longitudinal axis being arranged on the drive-carriage end of the push/pull cable (40).

## Revendications

1. Toit ouvrant (1) de véhicule, avec au moins un panneau (2) qui est monté à coulissement dans la direction x dans un rail de guidage dans la région de son bord avant et à pivotement autour d'un axe de pivotement orienté dans la direction y, et qui, au moyen d'un mécanisme de relèvement et de coulissement, sélectivement, ferme une ouverture de toit (3) (position fermée) ou la dégage au moins partiellement par relèvement de son bord arrière (position de ventilation) ou par un coulissement le long du rail de guidage (position ouverte),
avec un élément de verrouillage (28) qui verrouille par rapport au rail de guidage (14) le panneau (2) ou un élément structurel relié à ce dernier dans la position fermée ou dans la position relevée, et qui est disposé sur un levier de verrouillage (24) qui est disposé à pivotement essentiellement dans un plan vertical (plan x-z) sur le panneau (2) ou sur un élément structurel relié au panneau (2),
sachant que l'élément de verrouillage (28) peut être commandé par le mécanisme de relèvement et de coulissement de telle sorte qu'il peut coulisser pendant le mouvement de coulissement du panneau (2) le long du rail de guidage (14) et qu'il est engagé par crantage pendant le mouvement de pivotement du panneau (2) par rapport au rail de guidage (14),
**caractérisé en ce que** l'élément de verrouillage (28) est, vers la fin d'un mouvement de coulissement du panneau (2) d'une position ouverte en direction de sa position fermée, amené en engagement avec un évidement de crantage (14f) du rail de guidage (14) par un dispositif entraîneur (30, 32) disposé sur le levier de verrouillage (24).

2. Toit ouvrant selon la revendication 1, **caractérisé en ce que** le levier de verrouillage (24) est disposé en un point d'articulation (26) distant du point d'appui avant (patin glissant 8) du panneau (2), de telle sorte que la distance entre le point d'appui avant du panneau (2) et l'élément de verrouillage (28) engagé par crantage diminue lors du pivotement du panneau (2).

3. Toit ouvrant selon la revendication 1 ou 2, **caractérisé en ce que** le levier de verrouillage (24) est disposé sur un support de panneau (6) qui est fixement relié au panneau (2) et dont l'extrémité avant est montée à coulissement et à pivotement dans le rail de guidage (14), et qui est couplé, par l'intermédiaire d'un ensemble de coulisse (18, 20 ou 18', 20'), à un coulisseau d'entraînement (16) pouvant coulisser le long du rail de guidage.

4. Toit ouvrant selon la revendication 3, **caractérisé en ce que** le dispositif entraîneur comprend un premier élément de coulisse (30) disposé à l'extrémité libre du levier de verrouillage (24), élément qui coopère avec un deuxième élément de coulisse (32) disposé sur le coulisseau d'entraînement (16).

5. Toit ouvrant selon la revendication 4, **caractérisé en ce que** le premier élément de coulisse est une broche de coulisse (30) essentiellement parallèle à l'axe de pivotement du levier de verrouillage (24), et **en ce que** le deuxième élément de coulisse est formé par une rainure de coulisse (32) configurée sur le coulisseau d'entraînement (16).

6. Toit ouvrant selon l'une des revendications 1 à 5, **caractérisé en ce que** l'élément de verrouillage (28) est un ergot faisant latéralement saillie du levier de verrouillage (24), ergot qui s'engage dans une rainure de guidage (14e) du rail de guidage (14), et **en ce que** l'évidement de crantage (14f) est formé par un élargissement configuré dans un bord de guidage de la rainure de guidage (14e).

7. Toit ouvrant selon la revendication 6, **caractérisé en ce que** l'évidement de crantage (14f) est formé sur le bord de guidage supérieur de la rainure de guidage (14e), et **en ce que** la rainure de coulisse (32) formant le deuxième élément de coulisse est une rainure ouverte vers le côté arrière du coulisseau d'entraînement (16), avec une première partie s'étendant essentiellement vers l'avant qui est suivie d'une deuxième partie s'étendant essentiellement vers l'avant et vers le bas.

8. Toit ouvrant selon l'une des revendications 1 à 7, **caractérisé en ce que** l'évidement de crantage (14f) possède sur son bord avant un profil adapté au mouvement de l'élément de verrouillage (28) lors de l'entrée de l'élément de verrouillage dans l'évidement de crantage et lors de sa sortie de l'évidement de crantage (14f).

9. Toit ouvrant selon l'une des revendications 1 à 8, **caractérisé en ce que** le coulisseau d'entraînement (16) présente un bloc de soutien (36) qui soutient par le dessous le levier de verrouillage (24), et **en ce que** le levier de verrouillage (24) est, sur son bord inférieur, profilé avec un contour (38) de telle sorte que, pendant toute la course du coulisseau d'entraînement (16) depuis sa position avant correspondant à la position de ventilation du panneau (2) jusqu'à sa position correspondant à la sortie de l'élément de verrouillage (28) de l'évidement de crantage (14f), l'élément de verrouillage (28) est pressé vers le haut dans sa position verrouillée.

10. Toit ouvrant selon l'une des revendications 3 à 9, **caractérisé en ce que** l'ensemble de coulisse qui couple le support de panneau (6) au coulisseau d'entraînement (16) comprend une nervure de coulisse (18, 18a, 18b) partant en saillie sur une face latérale du support de panneau (6) et une partie de préhension (20) formée sur le coulisseau d'entraînement (16) et s'engageant autour de la nervure de coulisse.

11. Toit ouvrant selon la revendication 10, **caractérisé en ce que** le support de panneau (6) possède essentiellement un profil de section en forme de T renversé avec deux nervures de coulisse latérales (18a, 18b) en affleurement avec le bord inférieur du support de panneau, et **en ce que** la partie de préhension (20) du coulisseau d'entraînement (16) possède essentiellement la forme d'une rainure en T complémentaire de la forme de section du support de panneau (6).

12. Toit ouvrant selon l'une des revendications 3 à 11, **caractérisé en ce que** le coulisseau d'entraînement (16) peut être couplé à un câble (40) de traction et de compression, sachant qu'un ergot (44) faisant saillie transversalement à l'axe longitudinal du câble est disposé à l'extrémité côté coulisseau d'entraînement du câble (40) de traction et de compression, ergot qui peut être inséré dans une poche (46) formée sur un côté du coulisseau d'entraînement (16).
